# EUROPÄISCHE PATENTSCHRIFT

(11) **EP 3 324 257 B1**
(45) Veröffentlichungstag und Bekanntmachung des Hinweises auf die Patenterteilung: **14.07.2021**
(21) Anmeldenummer: 16199562.6
(22) Anmeldetag: 18.11.2016
(51) Int. Cl.: G05B 19/418, G05B 19/042

(54) **VERFAHREN UND SYSTEM ZUM BETRIEB TECHNISCHER GERÄTE DER AUTOMATISIERUNGSTECHNIK**
METHOD AND SYSTEM FOR OPERATION OF TECHNICAL DEVICES USED IN AUTOMATION TECHNOLOGY
PROCÉDÉ ET SYSTÈME DE FONCTIONNEMENT D'APPAREILS ROBOTIQUES

(43) Veröffentlichungstag der Anmeldung: 23.05.2018
(73) Patentinhaber: Schneider Electric Industries SAS, 92500 Rueil-Malmaison (FR)
(72) Erfinder: ZINN, Marcus, 63110 Rodgau (DE)
(74) Vertreter: Stoffregen, Hans-Herbert

(56) Entgegenhaltungen:
- EP-B1- 1 655 984
- DE-A1-102005 037 280
- US-A1- 2012 310 382

## Beschreibung

Die Erfindung bezieht sich auf ein Verfahren zum Betrieb eines technischen Geräts der Automatisierungstechnik wie Controller, Sensor oder Aktor mittels eines mobilen Geräts wie Smartphone, Tablet oder PDA nach dem Oberbegriff des Anspruchs 1. Ferner bezieht sich die Erfindung auf ein System zum Betrieb eines technischen Geräts der Automatisierungstechnik wie Controller, Sensor oder Aktor mittels eines mobilen Geräts wie Smartphone, Tablet oder PDA nach Anspruch 9.

Ein Verfahren der eingangs genannten Art ist in der US 2012/0310382 A1 beschrieben. Die US 2012/0310382 A1 betrifft ein industrielles Steuerungssystem mit Steuergeräten und einem Computer, der ausgebildet ist, eine Vielzahl von Konfigurations- und Überwachungsapplikationen für die Steuergeräte auszuführen und ein 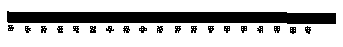 Interface bereitzustellen, über welches ein Benutzer die Steuergeräte des Steuerungssystems überwachen kann. Der Computer kann als mobiles Gerät ausgebildet sein und steht mit den Steuergeräten in Kommunikationsverbindung.

Die DE 10 2005 037 280 A1 betrifft ein Verfahren zur Kommunikation eines mobilen Geräts mit einem Arbeitsgerät, wobei zwischen dem mobilen Gerät und dem Arbeitsgerät eine Kommunikationsverbindung aufgebaut wird. Eine Applikation wird von dem Arbeitsgerät auf das mobile Gerät geladen und die geladene Applikation wird auf dem mobilen Gerät ausgeführt. Daten des Arbeitsgerätes werden anhand der Applikation ausgelesen und/oder modifiziert.

Die EP 1 655 984 B1 betrifft ein Verfahren und ein System zum Bedienen und Beobachten technischer Geräte. Bei dem Verfahren werden mit zumindest einem ersten und einem zweiten Sendemittel räumlich begrenzte Kommunikationsfelder erzeugt, wobei das erste Sendemittel einem technischen Gerät zugeordnet ist und das zweite Sendemittel einem mobilen Gerät, beispielsweise zum Bedienen und Beobachten des technischen Geräts, zugeordnet ist. Bei einer Überlappung der durch die Sendemittel erzeugten Kommunikationsfelder werden Informationen zwischen dem technischen Gerät und dem mobilen Gerät drahtlos ausgetauscht.

Nach dem Stand der Technik ist vorgesehen, dass das mobile Gerät eine mobile, von einem Anwender bewegbare HMI-Einheit (HMI = Human Machine Interface) ist. Das mobile Gerät kann als ein Web-Pad, PDA oder Mobiltelefon ausgebildet sein.

Nach dem Stand der Technik werden z.B. Messwerte, Konfigurations- und/oder Parameterdaten von dem technischen Gerät an das mobile Gerät übertragen und können in einer Benutzeroberfläche auf dem mobilen Gerät angezeigt werden. Auch besteht die Möglichkeit, Softwarekomponenten in dem technischen Gerät zu bedienen und Ausführungen technischer Aktionen zu beobachten. Das mobile Gerät kann verwendet werden, um Funktionen des technischen Geräts zu bedienen und zu beobachten, ohne dass dadurch jedoch der Funktionsumfang des technischen Geräts erweitert wird.

Um den Funktionsumfang, d.h. insbesondere Anzahl und Art der ausführbaren Softwarekomponenten, Rechenleistung und/oder Speicherkapazität zu erweitern, ist nach dem Stand der Technik ein Eingriff in die Hardware des technischen Geräts notwendig, beispielsweise durch Austausch von Hardwarekomponenten. Dies ist jedoch mit erheblichem Aufwand und Kosten verbunden, was unerwünscht ist, zumal ein erhöhter Funktionsumfang des technischen Geräts oftmals nur temporär benötigt wird.

Davon ausgehend liegt der vorliegenden Erfindung die Aufgabe zugrunde, ein Verfahren und ein System der eingangs genannten Art derart weiterzubilden, dass der Funktionsumfang, insbesondere Art und Umfang der ausführbaren Softwarekomponenten bzw. Software-basierten Funktionen, eines technischen Geräts mittels eines mobilen Geräts auf einfache und sichere Weise zumindest temporär erweitert wird.

Die Aufgabe wird erfindungsgemäß durch die Merkmale des Anspruchs 1 gelöst.

Unabhängig von der Technologie einer drahtlosen Kommunikationsverbindung sendet das mobile Gerät nach Herstellung der drahtlosen Kommunikationsverbindung eine Liste verfügbarer Funktionen und/oder verfügbarer Softwarekomponenten an das technische Gerät, wobei zumindest eine verfügbare Funktion und/oder verfügbare Softwarekomponente zu einer Liste bereits verfügbarer interner Funktionen oder Softwarekomponenten des technischen Geräts hinzugefügt wird.

In einer Laufzeitumgebung des mobilen Geräts wird zumindest eine durch das technische Gerät aus der Liste aufrufbare Softwarekomponente zur Ausführung einer oder mehrerer Funktionen gehostet, wobei die zumindest eine Softwarekomponente über die drahtlose Kommunikationsverbindung durch einen Funktionsaufruf des technischen Geräts aufgerufen und in der Laufzeitumgebung des mobilen Geräts ausgeführt und benutzt wird. Der Erfindung liegt die Idee zugrunde, in einem mobilen Gerät, wie beispielsweise einem Smartphone, Softwarekomponenten bereitzustellen, die von einem technischen Gerät wie Automatisierungsgerät in dem mobilen Gerät ausgeführt werden. Dazu ist vorgesehen, dass das mobile Gerät die Softwarekomponenten und eine Laufzeitumgebung zur Ausführung der Softwarekomponenten hostet.

Die Softwarekomponenten sind gemäß einer bevorzugten Ausführungsform durch das technische Gerät nur dann aufrufbar, wenn sich das mobile Gerät in der Nähe des technischen Geräts befindet.

Dadurch ergibt sich die Möglichkeit, den Softwarefunktionsumfang des technischen Geräts wie Automatisierungsgeräts temporär zu erweitern, ohne die Hardware und/oder Software des Automatisierungsgeräts zu verändern. Eine Funktionserweiterung des Automatisierungsgeräts erfolgt nur dann, wenn sich das mobile Gerät in der Nähe des Automatisierungsgeräts befindet. Insbesondere bei der Erweiterung von Finnwareeigenschaften wird durch das erfindungsgemäße Verfahren die Cyber-Security (Datensicherheit) erhöht. Ein Gesichtspunkt der Cyber-Security ist darauf gerichtet, zu verhindern, den Source-Code eines Automatisierungsgeräts illegal auszuwerten. Je mehr Softwarekomponenten in einem Automatisierungsgerät, insbesondere in der Firmware implementiert sind, desto größer ermöglichen Angreifern ein Zugang zu dem Automatisierungsgerät.

Das Verfahren verhindert den illegalen Zugriff auf Softwarekomponenten, da die Softwarekomponenten nur zugänglich sind, wenn sich ein mobiles Gerät in der Nähe des Automatisierungsgeräts befindet und die Softwarekomponente zur Verfügung stellt. Da die Softwarekomponenten nicht in dem Automatisierungsgerät selbst, sondern nur in dem mobilen Gerät gehostet sind, ist somit das Automatisierungsgerät für Zugriffe von außen weniger gefährdet.

Gemäß einer bevorzugten Ausführungsform ist vorgesehen, dass die drahtlose Kommunikationsverbindung und der Austausch von Informationen aktiviert wird, wenn sich das mobile Gerät in der Nähe des technischen Geräts befindet. Dadurch ist sichergestellt, dass die sensiblen Softwarekomponenten nur dann für das Automatisierungsgerät bzw. Benutzer des Automatisierungsgeräts verfügbar sind, wenn sich das mobile Gerät in der Nähe des technischen Geräts befindet.

Vorzugsweise wird die Nähe des mobilen Geräts zu dem technischen Gerät mittels eines Näherungssensors im technischen Gerät erfasst. Der Näherungssensor erzeugt dabei ein räumlich begrenztes Kommunikationsfeld (Nahfeld), wobei das mobile Gerät einen zweiten Näherungssensor aufweist, der ebenfalls ein räumlich begrenztes Kommunikationsfeld (Nahfeld) erzeugt, wobei bei einer Annäherung der Kommunikationsfelder die drahtlose Kommunikationsverbindung durch die Überlagerung der Kommunikationsfelder zwischen dem technischen und dem mobilen Gerät hergestellt wird.

Alternativ besteht auch die Möglichkeit, dass in dem technischen Gerät sowie dem mobilen Gerät jeweils ein Näherungssensor auf z.B. kapazitiver oder induktiver Basis integriert ist und dass bei Annäherung eine drahtlose Kommunikationsverbindung in Wifi-Technologie oder Bluetooth-Technologie etabliert wird.

Gemäß einer weiteren bevorzugten Ausführungsform werden die in der Liste des technischen Geräts aufgeführten internen und externen Funktionen und/oder Softwarekomponenten für einen mit dem technischen Gerät gekoppelten externen Benutzer zum Aufruf bereitgestellt. Ein externer Benutzer kann dabei ein Anwender, ein externes System und/oder das mobile Gerät selbst sein.

Eine weitere bevorzugte Verfahrensweise zeichnet sich dadurch aus, dass mehrere Automatisierungsgeräte unterschiedliche externe Funktionen und/oder externe Softwarekomponenten in dem mobilen Gerät gleichzeitig aufrufen, wobei die externen Funktionen und/oder externen Softwarekomponenten gleichzeitig in der Laufzeitumgebung ausgeführt werden.

Auch können mehrere Automatisierungsgeräte dieselbe externe Funktion und/oder externe Softwarekomponente in dem mobilen Gerät aufrufen, wobei mehrere Instanzen der selben externen Funktion und/oder externen Softwarekomponente in der Laufzeitumgebung ausgeführt werden.

Alternativ besteht die Möglichkeit, dass mehrere Automatisierungsgeräte dieselbe externe Funktion und/oder externe Softwarekomponente in dem mobilen Gerät aufrufen und dass eine einzige Instanz der Funktion oder Softwarekomponente in der Laufzeitumgebung des mobilen Geräts ausgeführt und benutzt wird.

Das erfindungsgemäße System zeichnet sich dadurch aus, dass das mobile Gerät eine Laufzeitumgebung aufweist, in der zumindest eine Softwarekomponente gehostet und ablauffähig ist und dass das technische Gerät ein Verbindungsmodul zum Aufruf der Ausführung der zumindest einen Softwarekomponente in dem mobilen Gerät aufweist.

Vorzugsweise weist das technische Gerät ein Erkennungsmodul zur Erkennung des sich in der Nähe befindlichen mobilen Geräts auf. Das Erkennungsgerät kann als ein Näherungssensor wie NFC-Sensor ausgebildet sein.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Figuren zu entnehmenden bevorzugten Ausführungsbeispielen.

Es zeigen:
- Fig. 1: eine erste Ausführungsform eines Systems zum Betrieb eines technischen Geräts mittels eines mobilen Geräts,
- Fig. 2: eine schematische Darstellung von Verfahrensschritten zur Erweiterung des Funktionsumfangs eines technischen Geräts mittels eines mobilen Geräts,
- Fig. 3: eine zweite Ausführungsform des Systems, wobei mehrere Automatisierungsgeräte je eine Softwarekomponente in dem mobilen Gerät nutzen,
- Fig. 4: eine dritte Ausführungsform des Systems, wobei mehrere Automatisierungsgeräte jeweils eine Instanz derselben Softwarekomponente in dem mobilen Gerät nutzen und
- Fig. 5: eine vierte Ausführungsform des Systems, wobei mehrere Automatisierungsgeräte dieselbe Instanz einer Softwarekomponente in dem mobilen Gerät nutzen.

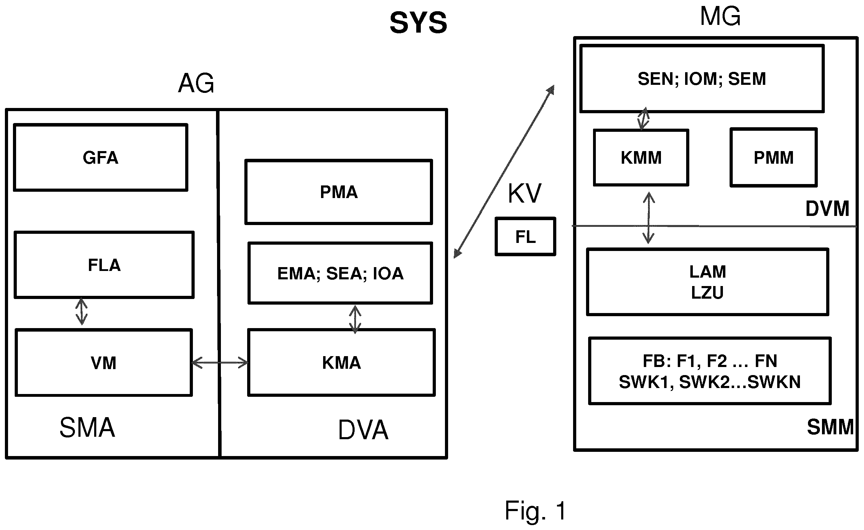

Fig. 1 zeigt rein schematisch eine erste Ausführungsform eines Systems SYS zum Betrieb und zur Funktionserweiterung eines technischen Geräts AG unter Verwendung eines mobilen Geräts MG.

Ein technisches Gerät AG im Sinne der Erfindung umfasst insbesondere Geräte der Automatisierungstechnik wie Controller (PLC; Programmable Logic Controller), Aktoren und Sensoren.

Das technische Gerät AG, das nachfolgend als Automatisierungsgerät bezeichnet wird, umfasst übliche Module einer Datenverarbeitungseinheit DVA, nämlich ein Prozessormodul PMA, ein Speichermodul SMA zur Speicherung von Software wie Firmware, Softwarekomponenten und Daten, ein Eingangs-Ausgangsmodul IOA sowie ein Kommunikationsmodul KMA mit Sende-Empfangsmodul SEA zur Kommunikation mit anderen Geräten.

Ein mobiles Gerät MG im Sinne der Erfindung umfasst mobile intelligente Geräte (Smart Devices) wie Smartphone, Tablet oder PDA. Das mobile Gerät MG umfasst ebenfalls übliche Module einer Datenverarbeitungseinheit DVM, nämlich ein Prozessormodul PMM, ein Speichermodul SPM zur Speicherung von Software wie Programmen und Daten, ein Eingangs-Ausgabemodul IOM zur Erfassung von Sensoren SEN sowie ein Kommunikationsmodul KMM mit Sende-Empfangsmodul SEM.

Eine Kommunikation zwischen dem mobilen Gerät MG und dem Automatisierungsgerät AG erfolgt über eine drahtlose Kommunikationsverbindung KV basierend auf einer Nahfeldtechnologie, wobei eine Kommunikationsverbindung KV zwischen dem Automatisierungsgerät AG und dem mobilen Gerät MG nur dann aufgebaut wird, wenn sich das mobile Gerät MG in unmittelbarer Nähe des Automatisierungsgeräts AG befindet.

Zur Erkennung des mobilen Geräts MG weist das Automatisierungsgerät AG ein Erkennungsmodul EMA auf, welches als NFC-Transmitter (NFC = Near Field Communication; Nahfeldkommunikation) ausgebildet ist und mit dem in dem mobilen Gerät angeordneten Sensor SEN zusammenwirkt, der als NFC-Transmitter ausgebildet ist. Nach Erkennung des mobilen Geräts MG wird die drahtlose Kommunikationsverbindung KV eingerichtet. Die Kommunikationsverbindung KV kann in NFC-Technologie mittels der NFC-Transmitter oder in WIFI- bzw. BLUETOOTH-Technologie mittels WIFI- bzw. BLUETOOTH -Sender-Empfänger-Module eingerichtet werden.

Gemäß der Erfindung sind in dem mobilen Gerät MG ein oder mehrere Softwarekomponenten SWK1...SWKN und ein Lade- und Ausführungsmodul LAM mit Laufzeitumgebung LZU zur Ausführung zumindest einer der Softwarekomponenten SWK1...SWKN gehostet. Jeder Softwarekomponente SWK1...SWKN ist zumindest eine Funktion F1...FN zugeordnet, die bei der Ausführung der Softwarekomponente SWK1...SWKN bereitgestellt wird bzw. werden. Die Funktionen F1...FN werden in einer Funktionen-Bibliothek FB abgelegt.

Das Automatisierungsgerät AG ist gemäß der Erfindung ausgebildet, um die von dem mobilen Gerät MG zur Verfügung gestellten Softwarekomponenten SWK1....SWKN aufzurufen und deren Funktionen F1...FN ergänzend oder alternativ zu bereits implementierten Gerätefunktionen GFA zu nutzen. Dazu weist das Automatisierungsgerät AG ein Verbindungsmodul VM auf, mit dem die in dem mobilen Gerät MG gehosteten Softwarekomponenten SWK1...SWKN über die Kommunikationsmodule KMA, KMM aufgerufen und auf dem mobilen Gerät MG ausgeführt werden können.

Bei einer Annäherung des mobilen Geräts MG an das Automatisierungsgerät AG wird das mobile Gerät MG durch das Erkennungsmodul EMA erkannt und eine Client-Server-Verbindung etabliert, wobei das Automatisierungsgerät AG die Funktion eines Clients und das mobile MG die Funktion eines Servers übernimmt.

Durch das Verbindungsmodul VM wird eine Interprozesskommunikation wie beispielsweise eine RPC-Kommunikation (RPC = Remote Procedure Call; Aufruf einer fernen Prozedur) bereitgestellt, durch die das Automatisierungsgerät AG die Softwarekomponenten SWK1...SWKN in dem Lade- und Ausführungsmodul LAM des mobilen Geräts MG ausführen und nutzen kann. Das mobile Gerät MG liefert Informationen an das Automatisierungsgerät AG oder stellt die Funktionen F1...FN und Services zur Verfügung, die durch die Softwarekomponenten SWK1...SWKN in dem mobilen Gerät MG ausgeführt werden. Durch das erfindungsgemäße Verfahren kann der Funktionsumfang des Automatisierungsgeräts temporär erweitert werden, ohne die Hardware und/oder Firmware des Automatisierungsgeräts AG zu verändern oder zu beeinflussen.

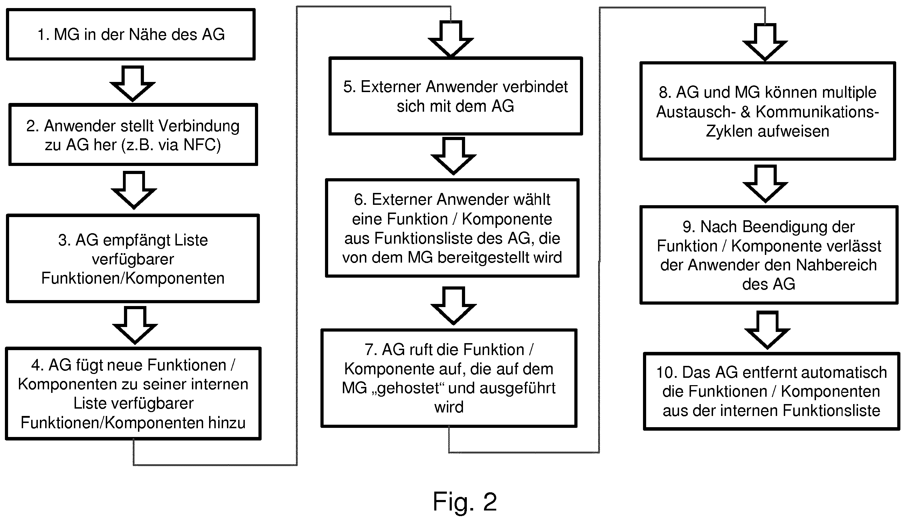

Fig. 2 zeigt Verfahrensschritte zur Erweiterung des Funktionsumfangs des Automatisierungsgeräts AG mittels eines mobilen Geräts MG. In einem ersten Verfahrensschritt erfolgt die Erkennung des mobilen Geräts MG in der Nähe des Automatisierungsgeräts AG durch Erfassung des räumlich begrenzten Kommunikationsfeldes des NFC-Sensors SEN des mobilen Geräts MG durch das Erkennungsmodul EMA des Automatisierungsgeräts AG.

Sobald sich das mobile Gerät in der Nähe des Automatisierungsgeräts befindet und die Kommunikationsverbindung eingerichtet ist, kann ein Anwender des mobilen Geräts MG in einem zweiten Verfahrensschritt eine Verbindung zu dem Automatisierungsgerät AG herstellen, wobei Erkennungs- und Anmeldenachrichten ausgetauscht werden. Dabei teilt das mobile Gerät MG dem Automatisierungsgerät AG mit, dass es Softwarekomponenten SWK1...SWKN für das Automatisierungsgerät AG bereitstellen kann, d.h. insbesondere "ein Funktionsbereitsteller für Automatisierungsfunktionen" ist.

Nach Herstellung der Kommunikationsverbindung KV sendet das mobile Gerät MG in einem dritten Verfahrensschritt eine Funktionsliste FLM an das Automatisierungsgerät AG, die die Funktionen F1...FN enthält, die auf dem mobilen Gerät MG verfügbar sind. Die Funktionsliste FLM wird durch einen Controller des Lade- und Ablaufmoduls LAM an das Automatisierungsgerät AG gesendet. Das Lade- und Ablaufmodul sowie der Controller können Teil einer ladbaren Applikation oder des Betriebssystems des mobilen Geräts MG sein.

In einem vierten Verfahrensschritt fügt das Automatisierungsgerät AG die von dem mobilen Gerät MG zur Verfügung gestellten Funktionen F1...FN einer internen Funktionsliste FLA als verfügbare Merkmale hinzu. Dadurch wird der Funktionsumfang des Automatisierungsgeräts AG erweitert, ohne dass die Hardware des Automatisierungsgeräts AG erweitert bzw. verändert werden muss.

Unter dem Begriff "Merkmale" werden die Funktionen F1...FN verstanden, die einem externen Benutzer, der eine Person oder ein System sein kann, über UML (UML = Unified Modeling Language; vereinheitlichte Modellierungssprache) bereitgestellt werden.

Bei der Anfrage durch das Verbindungsmodul VM über die Kommunikationsmodule KMA, KMM wird durch das Lade- und Ausführungsmodul LAM die Funktionsliste FLM an das Automatisierungsgerät gesendet. Die Funktionsliste FLM enthält die zur Verfügung stehenden Funktionen F1...FN. Der Informationsaustausch beinhaltet auch Schnittstellenbeschreibungen und Service-Level-Agreements, die von dem Automatisierungsgerät AG geprüft werden müssen. Nach der Prüfung werden kompatible Funktionen in die Funktionsliste FLA des Automatisierungsgeräts AG eingetragen.

Für den Austausch von Daten zwischen dem mobilen Gerät MG und dem Automatisierungsgerät AG können aus dem Stand der Technik bekannte Funktionsbeschreibungen wie AIDL, Cobra IDL, REST, SOAP u.a. sowie Service-Level-Agreements verwendet werden.

Nachdem die neuen Funktionen zu der internen Funktionsliste FLA des Automatisierungsgeräts AG als verfügbare Funktionen hinzugefügt wurden, können diese durch einen externen Benutzer genutzt werden.

Gemäß Verfahrensschritt fünf kann sich ein externer Benutzer mit dem Automatisierungsgerät AG verbinden. Der externe Benutzer kann dabei das mobile Gerät selbst, ein Desktop-Nutzer, ein System, eine Software oder ein weiteres mobiles Gerät sein.

Danach kann der externe Benutzer in Verfahrensschritt sechs eine Funktion aus der Funktionsliste FLA auswählen, die sodann von dem Verbindungsmodul VM gemäß Verfahrensschritt sieben aufgerufen wird.

Der Aufruf wird über die Kommunikationsmodule KMA, KMM an das Lade- und Ausführungsmodul LAM gesendet. Das Lade- und Ausführungsmodul LAM lädt die entsprechende Funktion aus der Funktions-Bibliothek FB und führt eine der Funktion zugeordnete Softwarekomponente in der entsprechenden Laufzeitumgebung LZU mit entsprechenden Ressourcen des mobilen Geräts MG wie Sensoren SEN und/oder Speicher SMM aus. Das Ergebnis des Funktionsaufrufes wird an das Verbindungsmodul VM zurückgesendet. Bei der Ausführung der Funktion in dem mobilen Gerät MG kann diese auch bei Bedarf auf weitere Ressourcen des mobilen Geräts MG zugreifen. Dies können interne Ressourcen wie beispielsweise Sensoren SEN oder externe Ressourcen wie beispielsweise Netzwerke oder eine Cloud sein.

Für den Aufruf der externen Funktionen können aus dem Stand der Technik bekannte Technologien wie RPC (Remote Procedure Call), Micro-Services, Web-Services oder ähnliche Technologien verwendet werden.

Für die Datenübertragung wird im beschriebenen Ausführungsbeispiel die NFC-Technologie verwendet. Alternativ kann die Kommunikation auch über z.B. Wifi durchgeführt werden, unter Verwendung von Kommunikationsprotokollen wie IOT-Protokollen z.B. XMPP ASOP.

Gemäß Verfahrensschritt acht kann in Abhängigkeit der Implementierung der externen Funktionen bzw. Softwarekomponenten das Gerät und die Komponenten multiple Austausch- und Kommunikationszyklen aufweisen.

Eine Softwarekomponente kann z.B. viele verschiedene Funktionen beinhalten, z.B. mathematische Funktionen. Das Automatisierungsgerät AG kann z.B. Tan-, Cos-, Sin-Funktionen nacheinander abfragen. Auch besteht die Möglichkeit, dass die Softwarekomponente einen Zwischenwert zurückliefert und das Automatisierungsgerät AG anfragt, ob dieses Ergebnis in Ordnung ist oder genauer berechnet werden muss, z.B. die Zahl Pi genauer zu berechnen, damit eine Kreisbewegung eines Roboterarms vom AG genauer berechnet werden kann.

Nach Beendigung der Ausführung der Softwarekomponente kann der Anwender in Verfahrensschritt neun den Nahbereich des Automatisierungsgeräts verlassen, so dass in Verfahrensschritt zehn das Automatisierungsgerät automatisch die externen Funktionen aus der internen Funktionsliste FLA entfernt werden.

Sollte während der Ausführung einer Softwarekomponente das mobile Gerät MG aus dem Nahbereich des Automatisierungsgeräts AG entfernt werden, wird dies von dem Automatisierungsgerät AG als "normaler" Fehler innerhalb seiner eigenen Firmware behandelt.

Nachdem die externen Funktionen aus der internen Funktionsliste FLA entfernt wurden, kehrt das Automatisierungsgerät AG in seinen normalen Betriebsmodus zurück. Nur "History-Locks" können die Hardware-Erweiterung und die aufgerufenen Funktionen zeigen. Wichtig dabei anzumerken ist, dass eine Änderung der Firmware nicht erfolgt ist.

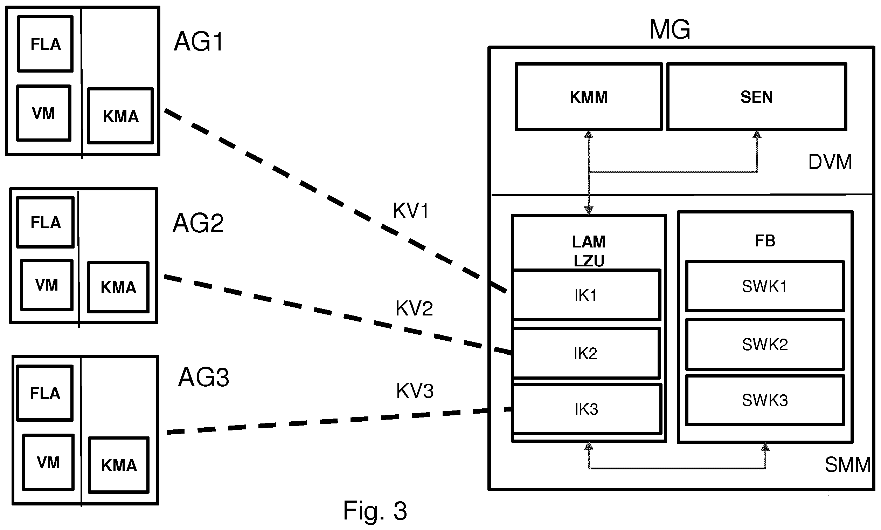

Die Fig. 3 bis 5 zeigen Ausführungsbeispiele, wobei mehrere Automatisierungsgeräte AG1...AG3 ein mobiles Gerät MG zur Funktionserweiterung nutzen.

Fig. 3 zeigt eine Ausführungsform, wobei mehrere Automatisierungsgeräte AG1, AG2, AG3 unterschiedliche Softwarekomponenten SWK1, SWK2, SWK3 aufrufen. Folglich unterstützt ein einziges mobiles Gerät MG mehrere Automatisierungsgeräte AG zur Ausführung unterschiedlicher Funktionen F1....FN bzw. Softwarekomponenten SWK1...SWK3.

Die Ausführung gemäß Fig. 3 entspricht der in Fig. 1 dargestellten Ausführungsform mit der Ausnahme, dass das Kommunikationsmodul KMM des mobilen Geräts MG mehrere Ein- und Ausgänge zur Kommunikation bereitstellt. Somit können die Automatisierungsgeräte AG1...AG3 über jeweils eine eigene Kommunikationsverbindung KV1, KV2, KV3 mit dem mobilen Gerät MG kommunizieren, um jeweils unterschiedliche Softwarekomponenten SWK1, SWK2, SWK3 auszuführen. Dabei ist vorgesehen, dass Instanzen IK1, IK2, IK3 der Softwarekomponenten in das Lade- und Ausführungsmodul LAM geladen und in diesem ausgeführt werden. Ferner ist das mobile Gerät MG ausgebildet, um multiple Anfragen "Session Handling" zu behandeln.

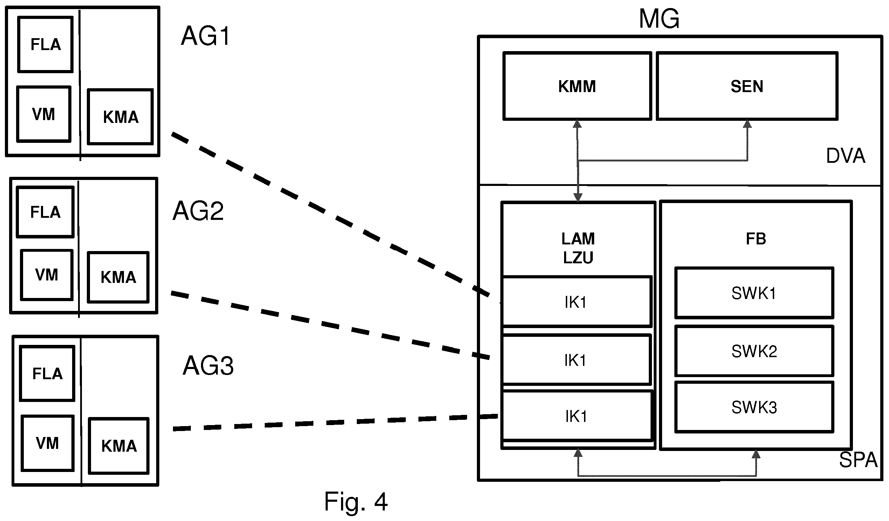

Fig. 4 zeigt eine Ausführungsform, wobei mehrere Automatisierungsgeräte AG1, AG2, AG3 die gleiche Softwarekomponente SWK1 jedoch mit unterschiedlichen Instanzen IK1 aufrufen. Das bedeutet, dass das mobile Gerät MG mehrere Automatisierungsgeräte AG1, AG2, AG3 bei gleichartigen Funktionen bzw. Softwarekomponenten unterstützt, die jedoch in unterschiedlichen Instanzen IK1 ausgeführt werden. Bei dem dargestellten Ausführungsbeispiel nutzt jedes der Automatisierungsgeräte AG1, AG2, AG3 die gleiche Softwarekomponente SWK1 jedoch ohne Austausch von Daten mittels dieser Softwarekomponente. Bei dieser Ausführungsform ist die Laufzeitumgebung in der Lage, jeweils eine Instanz IK1 jeder Softwarekomponente SWK1 für jedes Automatisierungsgerät AG1, AG2, AG3 zu erzeugen. Mit anderen Worten wird für jede Anfrage eines Automatisierungsgeräts AG1, AG2, AG3 eine lokale Kopie der benötigten Softwarekomponente SWK1 erzeugt, die nur für eine bestimmte Anfrage, d.h. exklusiv für ein bestimmtes Automatisierungsgerät genutzt wird und existiert.

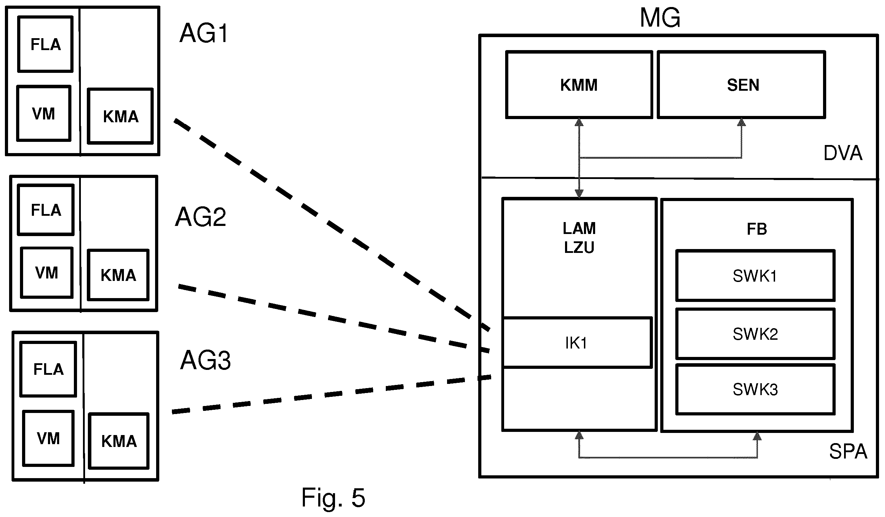

Fig. 5 zeigt eine Ausführungsform, wobei mehrere Automatisierungsgeräte AG1, AG2, AG3 dieselbe Instanz IK1 der Softwarekomponente SWK1 nutzen. Jedes Automatisierungsgerät AG1, AG2, AG3 nutzt dieselbe Softwarekomponente SWK1 mit Austausch von Daten mittels dieser Komponente. Die Laufzeitumgebung LZU leitet alle Anfragen von Automatisierungsgeräten AG1, AG2, AG3 an diese eine Softwarekomponente SWK1 weiter.

Die angebotene Softwarekomponente SWK1 kann beispielsweise eine Datenbank zur Lokalisierung von Text (Sprachübersetzung) sein. Jedes Automatisierungsgerät AG1, AG2, AG3 benötigt diese Komponente, um Benutzern Daten in einer bestimmten Sprache anzeigen.

Dieses Szenario ist besonders dann valide, wenn die Komponente es ermöglicht, Daten zwischen Automatisierungsgeräten auszutauschen. Z.B. kann ein Automatisierungsgerät AG1 in Form eines Sensors Messwerte in der Instanz IK1 des mobilen Geräts MG berechnen lassen, die ein zweites Automatisierungsgerät AG2 in Form eines Controllers später abholt oder in der Instanz IK1 des mobilen Geräts weiterberechnen lässt.

Die Erfindung ist besonders für nachfolgende Anwendungsfälle geeignet:
Zugriff auf interne Funktionen: Durch das erfindungsgemäße Verfahren sowie das erfindungsgemäße System besteht die Möglichkeit, dass Automatisierungsgeräte AG Funktionen der Softwarekomponenten SWK1...SWKn in dem mobilen Gerät MG nutzen, die keinen direkten Bezug zu dem mobilen Gerät MG aufweisen. Hier sei z.B. eine Funktion zur Übersetzung von Begriffen beispielsweise von der französischen in die englische Sprache genannt, die in dem mobilen Gerät MG ausgeführt, jedoch auf dem Automatisierungsgerät angezeigt oder genutzt werden.

Zugriff auf externe Funktionen: Des Weiteren kann das Automatisierungsgerät AG Funktionen der Softwarekomponenten SWK1...SWKN benutzen, welche Hardware- und Softwarekomponenten des mobilen Geräts MG nutzen. Dies kann beispielsweise eine Funktion sein, welche auf die GPS-Hardware des mobilen Geräts MG zugreift. Sodann können GPS-Koordinaten, sofern sich das mobile Gerät in der Nähe des Automatisierungsgeräts befindet, zur Kommissionierung eines Automatisierungsgeräts verwendet werden, welches sich an einem unbekannten Ort befindet.

Internes Hosting mit Lizenz-Überprüfung: Bei einem weiteren Anwendungsfall kann das Automatisierungsgerät AG die Softwarekomponenten SWK1...SWKN laden und in dem Speicher sowie einer Laufzeitumgebung des Automatisierungsgeräts hosten. Bei dieser Ausführung kann die Softwarekomponente und deren Funktionen nur verwendet werden, wenn das mobile Gerät zugreifbar ist, d.h. wenn sich dieses in der Nähe des Automatisierungsgeräts AG befindet.

Temporäres "upgrading": Eine weitere Anwendung sieht vor, dass das Automatisierungsgerät AG überprüft, ob die Softwarekomponenten SWK1...SWKN des mobilen Geräts MG eine neuere Version aufweisen, um diese anstelle der eigenen, älteren Version zu benutzen.

Temporäres "downgrading": Schließlich können die Softwarekomponenten SWK1...SWKN des mobilen Geräts MG in jedem Fall genutzt werden, selbst wenn diese Versionen älter sind als die Versionen der Softwarekomponenten des Automatisierungsgeräts AG.

Des Weiteren bietet das erfindungsgemäße Verfahren Vorteile bei der Inbetriebnahme und Diagnose von Automatisierungsgeräten. Üblicherweise wird die Inbetriebnahme und Diagnose nur zu bestimmten Zeiten während der Lebensdauer eines Automatisierungsgeräts ausgeführt. Inbetriebnahme ist dabei die Erstinstallation und Setup des Automatisierungsgeräts. Eine Diagnose wird in bestimmten Zeitabständen durchgeführt oder dann, wenn das Automatisierungsgerät Probleme bereitet. Sowohl bei der Inbetriebnahme als auch bei der Diagnose wird ein Zugriff auf die Hard- und Software des technischen Geräts wie beispielsweise Speicher oder Firmware bereitgestellt.

Derartige Installations- und Diagnosefunktionen werden üblicherweise 24 Stunden an 7 Tagen in der Woche durch das Automatisierungsgerät bereitgestellt, werden jedoch nur 2 % bis 3 % der Gesamtlebensdauer des Automatisierungsgeräts genutzt. Folglich ist das Automatisierungsgerät einerseits für fremden Zugriff anfällig und zwar über die gesamte Lebenszeit des Automatisierungsgeräts und andererseits werden Hardware Ressourcen wie Firmwarespeicher und Laufzeitspeicher benötigt.

Durch das erfindungsgemäße Verfahren können sowohl Zugriffe beschränkt als auch Ressourcen in dem Automatisierungsgerät eingespart werden, da die Softwarekomponenten durch das mobile Gerät für eine spezifische Inbetriebnahme- oder Diagnose-Funktion bereitgestellt werden.

Durch das erfindungsgemäße Verfahren werden die Ressourcen, um Inbetriebnahme- und Diagnose-Funktionen zu hosten, hauptsächlich durch das mobile Gerät bereitgestellt. Das Automatisierungsgerät benötigt lediglich limitierte Ressourcen, um die Kommunikationsverbindung mit dem mobilen Gerät herzustellen bzw. auszubilden.

Die bereits vorhandenen Ressourcen des mobilen Geräts wie Sensoren oder Kommunikationsmodule können verwendet werden, um die Möglichkeiten der Inbetriebnahme- und Diagnose-Funktionen zu erweitern, z.B. Hinzufügung von Geo-Daten zu einem Diagnoseprotokoll oder Scannen eines QR-Codes des Automatisierungsgeräts, um mehr Informationen für die Inbetriebnahme zu erhalten.

Ein weiteres Anwendungsgebiet des erfindungsgemäßen Verfahrens ist die Lizenzierung von Funktionen des Automatisierungsgeräts. Die Lizenzierung von Funktionen des Automatisierungsgeräts benötigt einen Satz von Software-Tools und eine physische Verbindung mit dem Automatisierungsgerät. Beispielsweise kann die mit einem Automatisierungsgerät verknüpfte Lizenz durch ein mobiles Gerät überprüft werden. Auch kann eine Funktions- oder Komponenten-basierte Lizenz durch das mobile Gerät geprüft werden. Des Weiteren besteht die Möglichkeit einer Kostenkalkulation, z.B. Zahlung bei Aufruf einer Funktion, die durch das mobile Gerät realisierbar ist. Auch kann das mobile Gerät andere Lizenzprüfungsmechanismen umfassen, z.B. Benutzername / Passwort, Internetprüfung, Kommunikation mit der Umgebung des Automatisierungsgeräts.

## Patentansprüche

1. Verfahren zum Betrieb eines technischen Geräts der Automatisierungstechnik wie Controller, Sensor oder Aktor mittels eines mobilen Geräts wie Smartphone, Tablet oder PDA,
wobei Informationen über eine drahtlose Kommunikationsverbindung zwischen dem technischen Gerät und dem mobilen Gerät ausgetauscht werden,
**dadurch gekennzeichnet,**
**dass** das mobile Gerät nach Herstellung der drahtlosen Kommunikationsverbindung eine Liste verfügbarer externer Funktionen und/oder verfügbarer externer Softwarekomponenten an das technische Gerät sendet, dass zumindest eine verfügbare externe Funktion und/oder verfügbare externe Softwarekomponente zu einer Liste bereits verfügbarer interner Funktionen oder Softwarekomponenten des technischen Geräts hinzugefügt wird,
**dass** in einer Laufzeitumgebung des mobilen Geräts zumindest eine durch das technische Gerät aus der Liste aufrufbare Softwarekomponente zur Ausführung einer oder mehrerer Funktionen gehostet wird und dass die zumindest eine Softwarekomponente über die drahtlose Kommunikationsverbindung durch einen Funktionsaufruf des technischen Geräts aufgerufen und in der Laufzeitumgebung des mobilen Geräts ausgeführt und benutzt wird.

2. Verfahren nach Anspruch 1,
**dadurch gekennzeichnet.**
**dass** die drahtlose Kommunikationsverbindung und ein Austausch von Informationen aktiviert wird, wenn sich das mobile Gerät in einer Nähe des technischen Geräts befindet.

3. Verfahren nach Anspruch 2,
**dadurch gekennzeichnet.**
**dass** die Nähe des mobilen Geräts zu dem technischen Gerät mittels eines ersten Näherungssensors im technischen Gerät erfasst wird.

4. Verfahren nach Anspruch 3,
**dadurch gekennzeichnet,**
**dass** der erste Näherungssensor ein räumlich begrenztes Kommunikationsfeld (Nahfeld) erzeugt, dass das mobile Gerät einen zweiten Näherungssensor aufweist, der ein räumlich begrenztes Kommunikationsfeld erzeugt und dass bei einer Annäherung der Kommumkationsfelder die drahtlose Kommunikationsverbindung durch die Überlagerung der Kommunikationsfelder zwischen dem technischen Gerät und dem mobilen Gerät hergestellt wird.

5. Verfahren nach zumindest einem der vorhergehenden Ansprüche,
**dadurch gekennzeichnet,**
**dass** die in der Liste des technischen Geräts aufgeführten internen und externen Funktionen und/oder Softwarekomponenten für einen mit dem technischen Gerät gekoppelten externen Benutzer zum Aufruf bereitgestellt werden.

6. Verfahren nach zumindest einem der vorhergehenden Ansprüche,
**dadurch gekennzeichnet,**
**dass** mehrere Automatisierungsgeräte unterschiedliche externe Funktionen und/oder externe Softwarekomponenten in dem mobilen Gerät gleichzeitig aufrufen, wobei die externen Funktionen und/oder externen Softwarekomponenten gleichzeitig in der Laufzeitumgebung ausgeführt werden.

7. Verfahren nach zumindest einem der vorhergehenden Ansprüche,
**dadurch gekennzeichnet,**
**dass** mehrere Automatisierungsgeräte dieselbe externe Funktion und/oder externe Softwarekomponente in dem mobilen Gerät aufrufen, wobei mehrere Instanzen der selben externen Funktion und/oder externen Softwarekomponente in der Laufzeitumgebung ausgeführt werden.

8. Verfahren nach zumindest einem der vorhergehenden Ansprüche,
**dadurch gekennzeichnet,**
**dass** mehrere Automatisierungsgeräte dieselbe externe Funktion und/oder externe Softwarekomponente in dem mobilen Gerät aufrufen und dass eine einzige Instanz der Funktion oder Softwarekomponente in der Laufzeitumgebung des mobilen Gerätes ausgeführt und benutzt wird.

9. System (SYS) zum Betrieb eines technischen Geräts (AG, AG1, AG2, AG3) der Automatisierungstechnik wie Controller, Sensor oder Aktor mittels eines mobilen Geräts (MG) wie Smartphone, Tablet oder PDA,
wobei das technische Gerät (AG, AG1, AG2, AG3) sowie das mobile Gerät (MG) jeweils ein Kommunikationsmodul (KMA; KMM) aufweisen, und
wobei zwischen dem mobilen Gerät (MG) und dem technischen Gerät (AG, AG1, AG2, AG3) eine drahtlose Kommunikationsverbindung (KV) herstellbar ist,
**dadurch gekennzeichnet,**
**dass** in dem mobilen Gerät (MG) eine Liste verfügbarer externer Funktionen und/oder verfügbarer externer Softwarekomponenten (SWK1...SWKn) gespeichert ist, die nach Herstellung der drahtlosen Kommunikationsverbindung an das technische Gerät (AG, AG1, AG2, AG3) versendbar ist, dass die zumindest eine externe Funktion und/oder verfügbare externe Softwarekomponente zu einer in dem technischen Gerät gespeicherten Liste zufügbar ist und
**dass** das mobile Gerät (MG) eine Laufzeitumgebung (LZU) aufweist, in der zumindest eine der aus der Liste auswählbaren Softwarekomponenten (SWK1...SWKn) gehostet und ablauffähig ist, wobei das technische Gerät (AG, AG1, AG2, AG3) ein Verbindungsmodul (VM) zum Aufruf der Ausführung der zumindest einen in dem mobilen Gerät (MG) gehosteten Softwarekomponente (SWK1...SWKn) aufweist.

10. System nach Anspruch 9,
**dadurch gekennzeichnet,**
**dass** das technische Gerät (AG, AG1, AG2, AG3) ein Erkennungsmodul (EMA) zur Erkennung des sich in der Nähe befindlichen mobilen Geräts (MG) aufweist.

11. System nach Anspruch 10,
**dadurch gekennzeichnet.**
**dass** das Erkennungsmodul (EMA) als ein erster Näherungssensor wie NFC-Sensor
ausgebildet ist.

12. System nach Anspruch 11,
**dadurch gekennzeichnet,**
**dass** der erste Näherungssensor (EMA) ein räumlich begrenztes Kommunikationsfeld (Nahfeld) erzeugt, dass das mobile Gerät (MG) einen zweiten Näherungssensor (SEN) aufweist, der ein räumlich begrenztes Kommunikationsfeld erzeugt und dass bei einer Annäherung der Kommunikationsfelder die drahtlose Kommunikationsverbindung (KV) durch die Überlagerung der Kommunikationsfelder zwischen dem technischen Gerät (AG) und dem mobilen Gerät (MG) hergestellt wird.

13. System nach Anspruch 9 bis 12,
**dadurch gekennzeichnet,**
**dass** das Kommunikationsmodul (KMM) des mobilen Geräts (MG) als ein mehrere Kommunikationsverbindungen (KV1, KV2, KV3) herstellendes Modul ausgebildet ist.

## Claims

1. A method for operating a technological device of automation technology such as a controller, sensor or actor by a mobile device such as a smartphone, tablet or PDA wherein information is exchanged via a wireless communication connection between the technological device and the mobile device, **characterized in**
**that** the mobile device transmits, after the establishing of the wireless communication connection, a function list of available external functions and/or available external software components to the technological device and that the at least one available external function and/or available external software component is added to an internal function list of already available internal functions or software components of the technological device, wherein
in a runtime environment of the mobile device at least one software component which can be invoked by the technological device for executing one or more functions is hosted, and that the at least one software component is invoked via the wireless communication connection by a function invocation of the technological device and is executed and used in the runtime environment of the mobile device.

2. The method according to Claim 1,
**characterized in**
**that** the wireless communication connection and an exchange of information are activated when the mobile device is in the vicinity of the technological device.

3. The method according to Claim 2,
**characterized in**
**that** the closeness of the mobile device to the technological device is detected by a first approximation sensor in the technological device.

4. The method according to Claim 3,
**characterized in**
**that** the first approximation sensor generates a spatially limited communication field (close field), that the mobile device comprises a second approximation sensor which generates a spatially limited communication field, and that upon an approximation of the communication fields the wireless communication connection is established by the superposing of the communication fields between the technological and the mobile device.

5. The method according to at least one of the preceding Claims,
**characterized in**
**that** the internal and external functions and/or software components cited in the device list of the technological device are made available to an external user coupled to the technological device for being invoked.

6. The method according to at least one of the preceding Claims,
**characterized in**
**that** several automating devices simultaneously invoke external functions and/or external software components in the mobile device, wherein the external functions and/or external software components are simultaneously executed in the runtime environment.

7. The method according to at least one of the preceding Claims,
**characterized in**
**that** several automating devices invoke the same external function and/or external software component in the mobile device, wherein several instances of the same external function and/or external software component are executed in the runtime environment.

8. The method according to at least one of the preceding Claims,
**characterized in**
**that** several automating devices invoke the same external function and/or external software component in the mobile device and that a single instance of the function or software component is executed and used in the runtime environment of the mobile device.

9. A system (SYS) for operating a technical device (AG, AG1, AG2, AG3) of automating technology such as controller, sensor or actor by a mobile device (MG) such as smart phone, tablet or PDA, wherein the technological device (AG, AG1, AG2, AG3) and the mobile device (MG) each comprise a communication module (KMA; KMM), and wherein a wireless communication connection (KV) can be established between the mobile device (MG) and the technological device (AG, AG1, AG2, AG3),
**characterized in**
**that** the mobile device (MG) comprises a list of available external functions and/or available external software components which are transmitted after the establishing of the wireless communication connection to the technological device (AG, AG1, AG2, AG3), that the at least one available external function and/or available external software component is/are added to an internal function list, which is stored in the technological device and that the mobile device (MG) has a runtime environment (LZU) in which at least one software component (SWK1...SWKn), which is selectabe from the list, is hosted and capable of running, and wherein the technological device (AG, AG1, AG2, AG3) comprises a connection module (VM) for invoking the execution of the at least one software component (SWK1...SWKn) in the mobile device (MG).

10. The system according to Claim 9,
**characterized in**
**that** the technological device (AG, AG1, AG2, AG3) comprises a recognition module (EMA) for recognizing the mobile device (MG) present in the vicinity.

11. The system according to Claim 10,
**characterized in**
**that** the recognition module (EMA) is constructed as a first approximation sensor such as an NFC sensor.

12. The system according to Claim 11,
**characterized in**
**that** the first approximation sensor (EMA) generates a spatially limited communication field (close field), that the mobile device (MG) comprises a second approximation sensor (SEN) which generates a spatially limited communication field, and that upon an approach of the communication fields the wireless communication connection (KV) is established by the superposing of the communication fields between the technological device (AG) and the mobile device (MG).

13. The system according to Claim 9 to 12,
**characterized in**
**that** the communication module (KMM) of the mobile device (MG) is constructed as a module which establishes several communication connections (KV1, KV2, KV3).

## Revendications

1. Procédé destiné à l'exploitation d'un dispositif technique d'automation tel qu'automate, capteur ou actionneur au moyen d'un appareil mobile tel que smartphone, tablette ou assistant électronique de poche,
sachant que des informations sont échangées via une liaison de communication sans fil entre le dispositif technique et l'appareil mobile,
**caractérisé en ce**
**qu'**une fois la liaison de communication sans fil établie, l'appareil mobile envoie au dispositif technique une liste de fonctions externes disponibles et/ou de composants logiciels externes disponibles qu'au moins une fonction externe disponible et/ou un composant logiciel externe disponible sont ajoutés à une liste de fonctions internes disponibles ou de composants logiciels du dispositif technique,
**que**, dans un environnement d'exécution de l'appareil mobile, au moins un composant logiciel interrogeable dans la liste est hébergé par le dispositif technique afin d'exécuter une ou plusieurs fonctions et que ledit au moins un composant logiciel est interrogé par un appel de fonction du dispositif technique via la liaison de de communication sans fil et est exécuté et utilisé dans l'environnement d'exécution de l'appareil mobile.

2. Procédé selon la revendication 1,
**caractérisé en ce**
**que** la liaison de communication sans fil et un échange d'informations sont activés quand l'appareil mobile se trouve à proximité du dispositif technique.

3. Procédé selon la revendication 2,
**caractérisé en ce**
**que** la proximité de l'appareil mobile par rapport au dispositif technique est acquise au moyen d'un premier capteur de proximité dans le dispositif technique.

4. Procédé selon la revendication 3,
**caractérisé en ce**
**que** le premier capteur de proximité génère un champ de communication spatialement limité (champ proche), que l'appareil mobile présente un second capteur de proximité qui génère un champ de communication spatialement limité et qu'en cas de rapprochement des champs de communication, la liaison de communication sans fil est établie par superposition des champs de communication entre le dispositif technique et l'appareil mobile.

5. Procédé selon au moins une des revendications précédentes,
**caractérisé en ce**
**que** les fonctions internes et externes exécutées dans la liste du dispositif technique et/ou les composants logiciels sont fournis pour être interrogeables par un utilisateur externe, accouplé au dispositif technique.

6. Procédé selon au moins une des revendications précédentes,
**caractérisé en ce**
**que** plusieurs appareils d'automatisation interrogent simultanément différentes fonctions externes et/ou différents composants logiciels externes dans l'appareil mobile, sachant que les fonctions externes et/ou composants logiciels externes sont exécutés simultanément dans l'environnement d'exécution.

7. Procédé selon au moins une des revendications précédentes,
**caractérisé en ce**
**que** plusieurs appareils d'automatisation interrogent la même fonction externe et/ou le même composant logiciel externe dans l'appareil mobile, sachant que plusieurs instances de la même fonction externe et/ou du même composant logiciel externe sont exécutées dans l'environnement d'exécution.

8. Procédé selon au moins une des revendications précédentes,
**caractérisé en ce**
**que** plusieurs appareils d'automatisation interrogent la même fonction externe et/ou le même composant logiciel externe dans l'appareil mobile et qu'une seule instance de la fonction et/ou du composant logiciel est exécutée et utilisée dans l'environnement d'exécution de l'appareil mobile.

9. Système (SYS) destiné à l'exploitation d'un dispositif technique (AG, AG1, AG2, AG3) tel qu'automate, capteur ou actionneur, au moyen d'un appareil mobile (MG) tel que smartphone, tablette ou assistant électronique de poche,
sachant que le dispositif technique (AG, AG1, AG2, AG3) ainsi que l'appareil mobile (MG) présentent chacun un module de communication (KMA ; KMM), et
sachant qu'une liaison de communication sans fil (KV) peut être établie entre l'appareil mobile (MG) et le dispositif technique (AG, AG1, AG2, AG3),
**caractérisé en ce**
**qu'**est enregistrée, dans l'appareil mobile (MG), une liste de fonctions externes disponibles et/ou de composants externes disponibles (SWK1...SWKn) qui est envoyable au dispositif technique (AG, AG1, AG2, AG3), une fois la liaison de communication sans fil établie, que ladite au moins une fonction externe et/ou ledit au moins un composant logiciel externe peuvent être ajoutés à une liste enregistrée dans le dispositif technique et
**que** l'appareil mobile (MG) présente un environnement d'exécution (LZU) dans lequel au moins un composant logiciel (SWK1...SWKn) sélectionnable dans la liste est hébergé et est exécutable, sachant que le dispositif technique (AG, AG1, AG2, AG3) présente un module de liaison (VM) pour demander l'exécution dudit au moins un composant logiciel (SWK1...SWKn) hébergé par l'appareil mobile (MG).

10. Système selon la revendication 9,
**caractérisé en ce**
**que** l'appareil technique (AG, AG1, AG2, AG3) présente un module de détection (EMA) destiné à détecter l'appareil mobile (MG) situé à proximité.

11. Système selon la revendication 10,
**caractérisé en ce**
**que** le module de détection (EMA) est conçu sous forme d'un premier capteur de proximité tel qu'un capteur NFC.

12. Système selon la revendication 11,
**caractérisé en ce**
**que** le premier capteur de proximité (EMA) génère un champ de communication spatialement limité (champ proche), que l'appareil mobile (MG) présente un second capteur de proximité (SEN) qui génère un champ de communication spatialement limité et qu'en cas de rapprochement des champs de communication, la liaison de communication sans fil (KV) est établie entre le dispositif technique (AG) et l'appareil mobile (MG) par superposition des champs de communication.

13. Système selon les revendications 9 à 12,
**caractérisé en ce**
**que** le module de communication (KMM) de l'appareil mobile (MG) est conçu sous forme de module établissant plusieurs liaisons de communication (KV1, KV2, KV3).
